# FASCICULE DE BREVET EUROPEEN

(11) **EP 4 266 658 B1**
(45) Date de publication et mention de la délivrance du brevet: **20.11.2024**
(21) Numéro de dépôt: 23168659.3
(22) Date de dépôt: 19.04.2023
(51) Int. Cl.: H04M 1/60, H04M 1/72409, H04M 1/72454, H04M 1/72466

(54) **APPAREIL ÉLECTRONIQUE D'INTERCONNEXION ADAPTÉ POUR INTERCONNECTER PLUSIEURS ÉQUIPEMENTS AUDIO, ET SYSTÈME AUDIO COMPRENANT UN TEL APPAREIL**
ELEKTRONISCHES VERBINDUNGSGERÄT ZUR VERBINDUNG MEHRERER AUDIOGERÄTE UND AUDIOSYSTEM MIT EINEM SOLCHEN GERÄT
ELECTRONIC INTERCONNECTION APPARATUS ADAPTED TO INTERCONNECT A PLURALITY OF AUDIO EQUIPMENTS, AND AUDIO SYSTEM COMPRISING SUCH AN APPARATUS

(30) Priorité: 20.04.2022 FR 2203629
(43) Date de publication de la demande: 25.10.2023
(73) Titulaire: Elno, 95100 Argenteuil (FR)
(72) Inventeur: BEN HELLAL, Khaled, 95100 Argenteuil (FR); BARON, Guillaume, 76240 Mesnil-Esnard (FR); GAIFFE, Thierry, 78100 Saint-Germain-en-Laye (FR)
(74) Mandataire: Lavoix

(56) Documents cités:
- US-A1- 2007 111 754
- US-A1- 2011 177 778
- US-A1- 2016 050 547
- US-A1- 2018 343 024
- US-A1- 2020 058 305

## Description

La présente invention concerne un appareil électronique interconnexion adapté pour interconnecter plusieurs équipements audio. Un équipement audio est un équipement de tête comportant au moins un élément parmi un microphone et un module de restitution audio, et au moins un autre équipement audio est choisi parmi une radio et un système d'intercommunication.

L'invention concerne également un système audio destiné à équiper un opérateur, notamment un fantassin, le système comprenant un tel équipement de tête et un tel appareil électronique d'interconnexion connecté à l'équipement de tête et destiné à être connecté à au moins un tel autre équipement audio choisi parmi la radio et le système d'intercommunication.

US 2016/0050547 A1 concerne des dispositifs de communication à deux boutons PTT qui permettent à un utilisateur de surveiller simultanément plusieurs réseaux d'appel/conférences vocales et de répondre sélectivement à chaque réseau d'appel.

US 2020/0058305 A1 décrit l'utilisation d'un accéléromètre ou d'un gyroscope pour déterminer une orientation du dispositif à l'intérieur duquel il est incorporé.

US 2018/0343024 A1 décrit la détermination de l'orientation d'un dispositif, par exemple via un accéléromètre ou un gyroscope.

On connaît du document EP 2 845 115 B1 un appareil électronique interconnexion du type précité, cet appareil étant également appelé dispositif PTT (de l'anglais *Push-To-Talk).* Un tel dispositif PTT comporte alors au moins un bouton d'appui pour parler, c'est-à-dire un bouton PTT, configuré pour - suite à une action de l'utilisateur - autoriser l'émission d'un signal audio, en particulier sur un canal préalablement associé au bouton PTT.

Ce dispositif PTT comprend plusieurs ports analogiques de communication, chacun étant apte à être relié à un équipement audio respectif, et le document précité concerne alors plus précisément des câbles particuliers de raccordement des équipements audio au dispositif PTT, chaque câble comportant une mémoire de stockage d'informations relatives à l'équipement audio associé audit câble, afin de faciliter l'association de chaque équipement audio avec le dispositif PTT.

Toutefois, ce dispositif PTT avec de tels câbles de raccordement n'est pas très pratique d'usage, puisqu'il nécessite notamment de stocker préalablement dans chaque câble les informations relatives aux différents équipements audio.

Le but de l'invention est alors de proposer un appareil électronique d'interconnexion permettant de faciliter l'interconnexion des différents équipements audio, c'est-à-dire la connexion de chaque équipement audio à l'appareil d'interconnexion.

A cet effet, l'invention a pour objet un appareil électronique d'interconnexion selon la revendication 1.

Avec l'appareil électronique d'interconnexion selon l'invention, chaque port de communication est conforme à une norme de communication numérique, ce qui permet de faciliter la connexion de chaque équipement audio à l'appareil électronique d'interconnexion, chaque équipement audio étant alors apte à échanger, selon la norme de communication numérique, des informations d'initialisation appropriées avec l'appareil d'interconnexion.

Autrement dit, chaque port de communication est un port numérique, et autorise une configuration automatique de la connexion entre l'équipement audio correspondant et l'appareil d'interconnexion. Cette configuration est alors transparente pour un utilisateur, tel qu'un opérateur, en particulier un fantassin, et l'utilisation de l'appareil d'interconnexion selon invention est donc bien plus simple pour l'utilisateur.

De préférence, chaque port de communication est conforme à une norme USB (de l'anglais *Universal Serial Bus),* et la configuration de la connexion entre l'appareil d'interconnexion et l'équipement audio également conforme à la norme USB est encore facilitée.

La configuration de l'appareil est adaptée en fonction d'une orientation de l'appareil par rapport à sa direction d'extension, ladite configuration étant en particulier modifiée en cas de détection d'un changement d'orientation de l'appareil. En effet, l'appareil d'interconnexion est de préférence apte à être positionné sur la poitrine gauche, ou respectivement droite, de l'utilisateur ; et le passage d'un positionnement sur la poitrine gauche à un positionnement sur la poitrine droite s'opère alors préférentiellement via un renversement de l'appareil d'interconnexion par rapport à un plan médian.

De préférence encore, les connecteurs, les sélecteurs et les boutons d'appui pour parler sont respectivement disposés de chaque côté dudit plan médian. Cela permet alors de proposer un fonctionnement symétrique de l'appareil que celui-ci soit positionné sur la poitrine gauche, ou inversement sur la poitrine droite de l'utilisateur.

Suivant d'autres aspects avantageux de l'invention, l'appareil électronique d'interconnexion est selon l'une quelconque des revendications 2 à 12.

L'invention concerne également un système audio selon la revendication 13.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

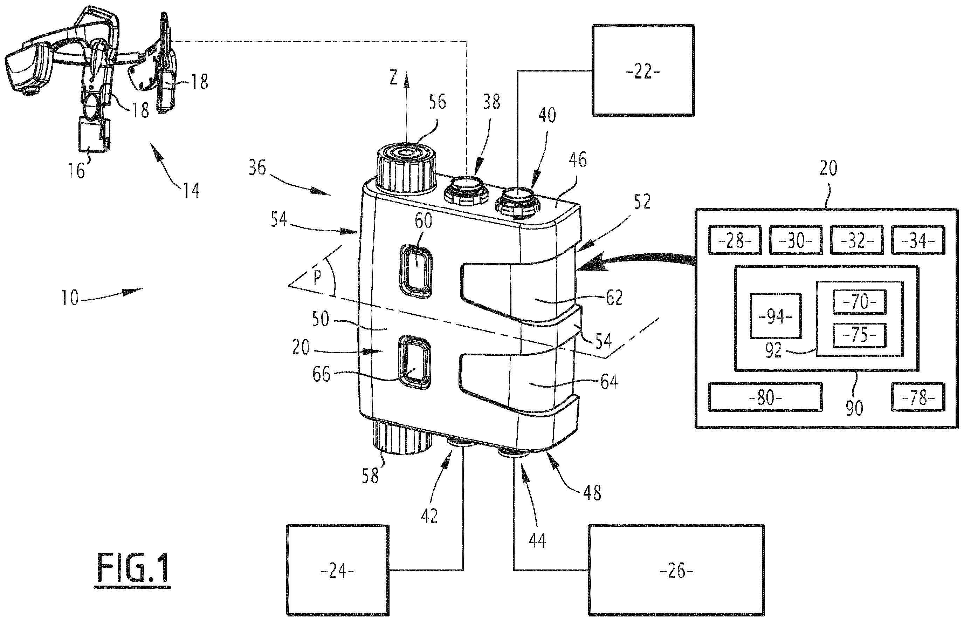

- la figure 1 est une représentation schématique d'un système audio destiné à équiper un opérateur, tel qu'un fantassin, le système comprenant un appareil électronique d'interconnexion, représenté en perspective, et un ou plusieurs équipements audio, tels qu'un équipement de tête, une première radio, une deuxième radio et un système d'intercommunication ; l'appareil d'interconnexion étant connecté à l'équipement de tête et à chacun des autres équipements audio, à savoir la première radio, la deuxième radio et le système d'intercommunication ; et

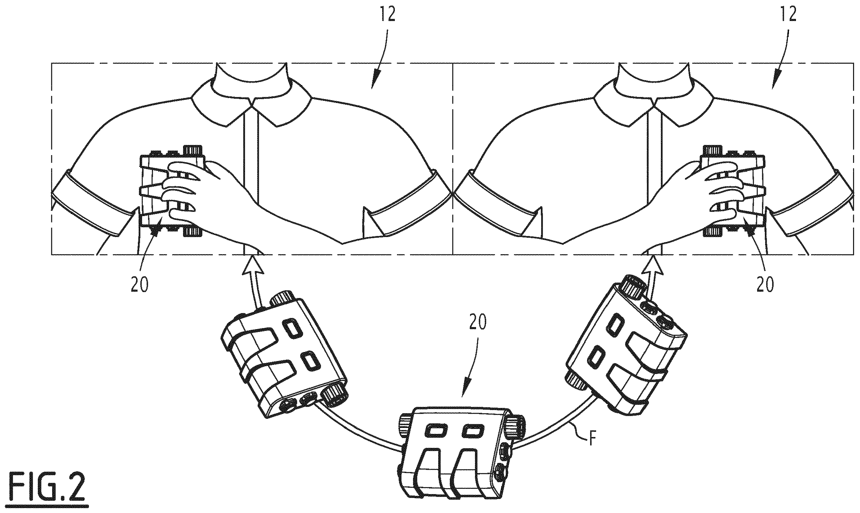

- la figure 2 est une vue schématique représentant un changement de positionnement de l'appareil d'interconnexion de la figure 1, d'un positionnement sur la poitrine droite de l'opérateur vers un positionnement sur la poitrine gauche, et inversement, un tel changement de positionnement s'opérant via un renversement de l'appareil d'interconnexion par rapport à un plan médian dudit appareil.

Sur la figure 1, un système audio 10 est destiné à équiper un opérateur 12, notamment un fantassin, visible sur la figure 2.

Le système audio 10 comprend un équipement de tête 14 comportant au moins un élément parmi un microphone 16 et un module de restitution audio 18 ; et un appareil électronique d'interconnexion 20 connecté à l'équipement de tête 14 et destiné à être connecté à au moins un autre équipement audio choisi parmi une radio 22, 24 et un système d'intercommunication 26.

Dans l'exemple de la figure 1, le système audio 10 comprend deux radios, à savoir une première radio 22 et une deuxième radio 24, ainsi que le système d'intercommunication 26. La première radio 22, la deuxième radio 24 et le système d'intercommunication 26 sont connus en soi.

Dans l'exemple de la figure 1, l'appareil électronique d'interconnexion 20, appelé appareil d'interconnexion 20 par la suite, est alors connecté, d'une part, à l'équipement de tête 14, et d'autre part, à chacun des autres équipements audio, à savoir à la première radio 22, à la deuxième radio 24 et au système d'intercommunication 26.

L'équipement de tête 14 et l'appareil d'interconnexion 20 sont configurés pour être portés par l'opérateur 12, comme représenté partiellement sur la figure 2, où l'appareil d'interconnexion 20 est porté soit sur la poitrine gauche de l'opérateur 12, ou bien sur sa poitrine droite.

La première radio 22 et la deuxième radio 24 sont également susceptibles d'être portées par l'opérateur 12, ou bien sont alternativement positionnées dans un véhicule, non représenté, à l'intérieur duquel se trouve l'opérateur 12. Le système d'intercommunication 26 est de préférence positionné dans ledit véhicule. En variante, le système d'intercommunication 26 est aussi susceptible d'être porté par l'opérateur 12.

L'équipement de tête 14 est connu en soi, et comporte de préférence au moins un microphone 16 et deux modules de restitution audio 18. Un exemple d'un tel équipement de tête 14 est décrit dans le document FR 3 019 422 A1 publié le 2 octobre 2015.

Dans l'exemple de la figure 1, le microphone 16 est également appelé microphone ostéophonique et est apte à recevoir par conduction osseuse des oscillations vibratoires et à les transformer en un signal électrique respectif. Dans cet exemple, chaque module de restitution audio 18 est un module ostéophonique, et comporte notamment un transducteur d'excitation mécanique osseuse, apte à transformer un signal électrique reçu en onde vibratoire représentative d'un signal sonore et à les transmettre au nerf auditif de l'opérateur 12 par conduction osseuse.

En variante, le microphone 16 est un microphone aérien apte à recevoir des ondes sonores acoustiques et à les transformer en un signal électrique respectif.

En variante encore, chaque module de restitution audio 18 est un module acoustique comportant un haut-parleur apte à transformer un signal électrique reçu en onde sonore, et à les transmettre alors au nerf auditif de l'opérateur 12 par conduction aérienne à travers son oreille respective, notamment à travers son conduit auditif.

L'appareil d'interconnexion 20 est configuré pour interconnecter plusieurs équipements audio 14, 22, 24, 26, et comprend alors plusieurs ports de communication 28, 30, 32, 34, chacun étant configuré pour être relié à un équipement audio 14, 22, 24, 26 respectif.

Dans l'exemple de la figure 1, l'appareil d'interconnexion 20 comprend un premier port de communication 28 relié à l'équipement de tête 14, un deuxième port de communication 30 relié à la première radio 22, un troisième port de communication 32 relié à la deuxième radio 24 et un quatrième port de communication 34 relié au système d'intercommunication 26.

En complément, l'appareil d'interconnexion 20 comprend un boîtier 36 et plusieurs connecteurs 38, 40, 42, 44, chacun étant fixé au boîtier 36 et associé à un port de communication 28, 30, 32, 34 respectif. Le boîtier 36 s'étend sensiblement selon une direction d'extension, telle que la direction verticale Z dans l'exemple de la figure 1, et comporte une paroi supérieure 46, une paroi inférieure 48, une paroi avant 50, une paroi arrière 52 destinée typiquement à être en contact avec l'opérateur 12, et deux parois latérales 54 reliant la paroi avant 50 à la paroi arrière 52. La paroi avant 50, la paroi arrière 52 et les deux parois latérales 54 relient la paroi supérieure 46 à la paroi inférieure 48, en étant sensiblement perpendiculaires à celles-ci. La paroi supérieure 46 et la paroi inférieure 48 s'étendent chacune sensiblement dans un plan respectif, perpendiculaire à la direction d'extension, tel que dans un plan horizontal respectif perpendiculaire à la direction verticale Z. La paroi avant 50, la paroi arrière 52 et les deux parois latérales 54 s'étendent chacune sensiblement dans un plan respectif incluant la direction d'extension, tel que dans un plan vertical respectif contenant la direction verticale Z.

Dans l'exemple de la figure 1, l'appareil d'interconnexion 20 comprend un premier connecteur 38 associé au premier port de communication 28, un deuxième connecteur 40 associé au deuxième port de communication 30, un troisième connecteur 42 associé au troisième port de communication 32 et un quatrième connecteur 44 associé au quatrième port de communication 34.

En complément facultatif, les connecteurs 38, 40, 42, 44 sont de préférence disposés de chaque côté d'un plan médian P de l'appareil d'interconnexion 20. Le plan médian P est typiquement un plan perpendiculaire à la direction d'extension de l'appareil d'interconnexion 20, tel qu'un plan horizontal perpendiculaire à la direction verticale d'extension dans l'exemple de la figure 1. De préférence encore, un même nombre de connecteur(s) 38, 40, 42, 44 sont disposés de chaque côté de ce plan médian P.

En complément facultatif encore, lorsque l'appareil d'interconnexion 20 comprend un nombre pair de connecteurs 38, 40, 42, 44, une moitié des connecteurs 38, 40, 42, 44 est disposée d'un côté du plan médian P, et l'autre moitié est disposée de l'autre côté du plan médian P. Selon ce complément facultatif, les connecteurs 38, 40, 42, 44 sont de préférence encore disposés de manière symétrique par rapport au plan médian P.

Dans l'exemple de la figure 1, les premier et deuxième connecteurs 38, 40 sont agencés à travers la paroi supérieure 46, et les troisième et quatrième connecteurs 42, 44 sont agencés à travers la paroi inférieure 48. Les connecteurs 38, 40, 42, 44 sont de préférence des connecteurs militarisés, tels que des connecteurs conformes à la norme DEFENSE GAM T2.

Dans l'exemple de la figure 1, les premier et deuxième connecteurs 38, 40 sont alors disposés d'un côté de ce plan médian P, et les troisième et quatrième connecteurs 42, 44 sont disposés de l'autre côté dudit plan médian P. Le premier connecteur 38 est de préférence agencé de manière symétrique avec le troisième connecteur 42 par rapport au plan médian P. De manière analogue, le deuxième connecteur 40 est de préférence agencé de manière symétrique avec le quatrième connecteur 44 par rapport au plan médian P.

Dans l'exemple de la figure 1, le premier connecteur 38 est alors configuré pour recevoir un connecteur complémentaire d'un câble, non représenté, de liaison avec l'équipement de tête 14 ; le deuxième connecteur 40, et respectivement le troisième connecteur 42, sont chacun configurés pour recevoir un connecteur complémentaire d'un câble, non représenté, de liaison avec la première radio 22, et respectivement avec la deuxième radio 24 ; et le quatrième connecteur 44 est configuré pour recevoir un connecteur complémentaire d'un câble, non représenté, de liaison avec le système d'intercommunication 26.

L'appareil d'interconnexion 20 comprend au moins un sélecteur 56, 58, et au moins un bouton d'appui pour parler 60, 62, 64, 66.

En complément facultatif, l'appareil d'interconnexion 20 comprend plusieurs sélecteurs 56, 58. Les sélecteurs 56, 58 sont de préférence disposés de chaque côté du plan médian P de l'appareil d'interconnexion 20. De préférence encore, un même nombre de sélecteur(s) 56, 58 sont disposés de chaque côté de ce plan médian P.

En complément facultatif encore, lorsque l'appareil d'interconnexion 20 comprend un nombre pair de sélecteurs 56, 58, une moitié des sélecteurs 56, 58 est disposée d'un côté du plan médian P, et l'autre moitié est disposée de l'autre côté du plan médian P. Selon ce complément facultatif, les sélecteurs 56, 58 sont de préférence encore disposés de manière symétrique par rapport au plan médian P.

Dans l'exemple de la figure 1, l'appareil d'interconnexion 20 comprend deux sélecteurs 56, 58, à savoir un premier sélecteur 56 et un deuxième sélecteur 58. Le premier sélecteur 56 est par exemple disposé au contact de la paroi supérieure 46, et le deuxième sélecteur 58 est par exemple disposé au contact de la paroi inférieure 48. Le premier sélecteur 56 et le deuxième sélecteur 58 sont alors disposés de chaque côté du plan médian P horizontal de l'appareil d'interconnexion 20. De préférence, le premier sélecteur 56 et le deuxième sélecteur 58 sont disposés de manière sensiblement symétrique par rapport audit plan médian P.

En complément facultatif, l'appareil d'interconnexion 20 comprend plusieurs boutons d'appui pour parler 60, 62, 64, 66. Les boutons d'appui pour parler 60, 62, 64, 66 sont de préférence disposés de chaque côté du plan médian P de l'appareil d'interconnexion 20. De préférence encore, un même nombre de bouton(s) d'appui pour parler 60, 62, 64, 66 sont disposés de chaque côté de ce plan médian P.

En complément facultatif encore, lorsque l'appareil d'interconnexion 20 comprend un nombre pair de boutons d'appui pour parler 60, 62, 64, 66, une moitié des boutons d'appui pour parler 60, 62, 64, 66 est disposée d'un côté du plan médian P, et l'autre moitié est disposée de l'autre côté du plan médian P. Selon ce complément facultatif, les boutons d'appui pour parler 60, 62, 64, 66 sont de préférence encore disposés de manière symétrique par rapport au plan médian P.

Dans l'exemple de la figure 1, l'appareil d'interconnexion 20 comprend quatre boutons d'appui pour parler 60, 62, 64, 66, à savoir un premier bouton d'appui pour parler 60, un deuxième bouton d'appui pour parler 62, un troisième bouton d'appui pour parler 64 et un quatrième bouton d'appui pour parler 66. Les premier et quatrième boutons d'appui pour parler 60, 66 sont par exemple disposés dans la paroi avant 50, et les deuxième et troisième boutons d'appui pour parler 62, 64 sont par exemple disposés dans une paroi latérale 54 respective, tout en débordant partiellement sur la paroi avant 50. Les premier et deuxième boutons d'appui pour parler 60, 62 sont par exemple disposés d'un côté du plan médian P, et les troisième et quatrième boutons d'appui pour parler 64, 66 sont disposés de l'autre côté du plan médian P. De préférence, les premier et quatrième boutons d'appui pour parler 60, 66 sont disposés l'un l'autre de manière symétrique par rapport au plan médian P ; et de manière analogue les deuxième et troisième boutons d'appui pour parler 62, 64 sont disposés de manière symétrique par rapport audit plan médian P.

L'appareil d'interconnexion 20 comprend un dispositif électronique de traitement 70 relié à chaque sélecteur 56, 58 et à chaque bouton d'appui pour parler 60, 62, 64, 66.

L'appareil d'interconnexion 20 comprend en outre un module 75 de gestion d'une configuration d'au moins un élément parmi les ports de communication 28, 30, 32, 34, l'au moins un sélecteur 56, 58 et l'au moins un bouton d'appui pour parler 60, 62, 64, 66, le module de gestion 75 étant alors relié à l'au moins un élément pour lequel il est adapté à gérer la configuration associée.

L'appareil d'interconnexion 20 comprend en outre un capteur 78 configuré pour détecter un changement d'orientation de l'appareil 20 par rapport à la direction d'extension. Le capteur 78 est par exemple un accéléromètre.

En complément facultatif encore, l'appareil d'interconnexion 20 comprend en outre un module de communication sans fil 80 configuré pour communiquer avec un équipement audio 14, 22, 24, 26 respectif selon un protocole de radiocommunication. Le module de communication sans fil 80 est typiquement un module à courte portée, telle qu'une portée inférieure à 100 m. Le protocole de radiocommunication est par exemple conforme à une norme Bluetooth^{®}, telle qu'en version 5.0 ou ultérieure. Le module de communication sans fil 80 est connu en soi, et comporte typiquement une antenne de communication et un émetteur-récepteur radioélectrique, non représenté, l'émetteur-récepteur radioélectrique étant connecté à l'antenne et conforme au protocole de communication.

Dans l'exemple de la figure 1, l'appareil d'interconnexion 20 comprend une unité de traitement d'informations 90, formée par exemple d'une mémoire 92 et d'un processeur 94 associé à la mémoire 92.

Dans l'exemple de la figure 1, le dispositif de traitement 70 et le module de gestion 75 sont réalisés chacun sous forme d'un logiciel, ou d'une brique logicielle, exécutable par le processeur 94. La mémoire 92 de l'appareil d'interconnexion 20 est alors apte à stocker un logiciel de traitement et un logiciel de gestion. Le processeur 94 est alors apte à exécuter chacun des logiciels parmi le logiciel de traitement et le logiciel de gestion.

En variante non représentée, le dispositif de traitement 70 et le module de gestion 75 sont réalisés chacun sous forme d'un composant logique programmable, tel qu'un FPGA (de l'anglais *Field Programmable Gate Array),* ou encore sous forme d'un circuit intégré, tel qu'un ASIC (de l'anglais *Application Spécifie Integrated Circuit).*

Lorsque le dispositif de traitement 70 et le module de gestion 75 sont réalisés sous forme d'un ou plusieurs logiciels, c'est-à-dire sous forme d'un programme ordinateur, ils sont en outre aptes à être enregistrés sur un support, non représenté, lisible par ordinateur. Le support lisible par ordinateur est par exemple un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

Chaque radio 22, 24 est connue en soi, et est typiquement une radio militarisée lorsque l'opérateur 12 est un fantassin.

Le système d'intercommunication 26 est connu en soi, et est également appelé système d'interphonie. Un exemple d'un tel système d'intercommunication 26 est décrit dans le document FR 2 988 543 A1 publié le 27 septembre 2013. Le système d'intercommunication 26 est typiquement un système d'interphonie militarisé lorsque l'opérateur 12 est un fantassin.

Selon l'invention, chaque port de communication 28, 30, 32, 34, en particulier chacun des premier 28, deuxième 30, troisième 32 et quatrième 34 ports de communication, est conforme à une norme de communication numérique.

La norme de communication numérique est par exemple une norme USB, telle que la norme USB 2.0 ou une version ultérieure.

Chaque sélecteur 56, 58 est configuré pour sélectionner - en fonction d'une manipulation de l'opérateur 12 - une valeur d'un paramètre de fonctionnement. Le paramètre de fonctionnement est typiquement choisi parmi le groupe consistant en : un volume sonore en écoute, un identifiant d'un ensemble d'un ou plusieurs canaux en écoute, et un volume sonore en émission, avec de préférence en outre une fonctionnalité de sourdine en émission.

Dans l'exemple de la figure 1, le premier sélecteur 56 est configuré pour sélectionner, suite à une manipulation de l'opérateur 12, la valeur de l'identifiant de l'ensemble d'un ou plusieurs canaux en écoute ; et le deuxième sélecteur 58 est configuré pour sélectionner, suite à une manipulation de l'opérateur 12, la valeur d'un volume sonore respectif, tel que le volume sonore en émission ou encore le volume sonore en écoute. Autrement dit, dans cet exemple, le premier sélecteur 56 permet de modifier le ou les canaux en écoute, et le deuxième sélecteur 58 permet de faire varier la valeur du volume sonore.

Dans l'exemple de la figure 1, chaque sélecteur 56, 58 est en forme d'une molette, celle-ci étant typiquement mobile en rotation autour de l'axe d'extension de l'appareil d'interconnexion 20, tel que l'axe vertical Z.

Chaque bouton d'appui pour parler 60, 62, 64, 66 est configuré pour, suite à une action de l'opérateur 12, autoriser l'émission d'un signal audio. Chaque bouton d'appui pour parler 60, 62, 64, 66 est associé à un seul canal en émission ou bien associé à une salle de conférence à plusieurs canaux en émission. L'homme du métier comprendra que lorsqu'un bouton d'appui pour parler 60, 62, 64, 66 respectif est associé à une salle de conférence respective comportant plusieurs canaux en émission, alors l'activation de ce bouton d'appui pour parler 60, 62, 64, 66 permet une émission simultanée du signal audio sur tous les canaux de la salle de conférence correspondante.

L'association de chaque bouton d'appui pour parler 60, 62, 64, 66 à un canal respectif ou une salle de conférence respective est typiquement configurée au démarrage de l'appareil d'interconnexion 20 à partir d'un fichier prédéfini de configuration de bouton(s) d'appui pour parler 60, 62, 64, 66.

Le dispositif de traitement 70 est configuré pour acquérir un signal audio d'entrée via un port de communication 28, 30, 32, 34 respectif et pour délivrer un signal audio de sortie à un autre port de communication 28, 30, 32, 34 respectif, le signal de sortie étant obtenu à partir du signal audio d'entrée.

Le module de gestion 75 est configuré pour gérer la configuration d'au moins un élément parmi les ports de communication 28, 30, 32, 34, l'au moins un sélecteur 56, 58 et l'au moins un bouton d'appui pour parler 60, 62, 64, 66.

La configuration de chaque port de communication 28, 30, 32, 34 comporte par exemple l'association à un équipement audio respectif 14, 22, 24, 26.

La configuration de chaque sélecteur 56, 58 comporte par exemple l'association à un paramètre de fonctionnement respectif.

La configuration de chaque bouton d'appui pour parler 60, 62, 64, 66 comporte par exemple l'association à un ensemble respectif d'un ou plusieurs canaux sur lesquels est effectuée l'émission du signal audio.

En complément facultatif, le module de gestion 75 est apte à recevoir un fichier de configuration, et est configuré pour modifier ladite configuration, en fonction du fichier de configuration reçu.

Le module de gestion 75 est configuré pour modifier ladite configuration en cas de détection d'un changement d'orientation de l'appareil d'interconnexion 20 par rapport à la direction d'extension.

Selon ce complément ou cette variante, le module de gestion 75 permet alors notamment d'associer systématiquement un même paramètre de fonctionnement au sélecteur 56, 58 disposé en partie supérieure de l'appareil d'interconnexion 20 ; et respectivement le cas échéant au sélecteur 56, 58 disposé en partie inférieure de l'appareil d'interconnexion 20. Le paramètre de fonctionnement associé de manière systématique au sélecteur 56, 58 disposé en partie supérieure est par exemple l'identifiant de l'ensemble d'un ou plusieurs canaux en écoute, et celui associé de manière systématique au sélecteur 56, 58 disposé en partie inférieure est par exemple un volume sonore respectif, tel que le volume sonore en émission ou encore le volume sonore en écoute.

Selon ce complément ou cette variante, et lorsque l'appareil d'interconnexion 20 comprend le capteur 78, le module de gestion 75 est de préférence connecté au capteur 78 et configuré alors pour détecter le changement d'orientation via ledit capteur 78.

Selon ce complément ou cette variante, le module de gestion 75 est - également ou en variante - apte à détecter une connexion de l'équipement de tête 14 avec l'un des ports de communication 28, 30, 32, 34, et est alors configuré pour déterminer l'orientation de l'appareil 20, en fonction du port de communication 28, 30, 32, 34 relié à l'équipement de tête 14. Le cas échéant, le module de gestion 75 est typiquement configuré pour déterminer que le port de communication 28, 30, 32, 34 relié à l'équipement de tête 14 et le ou l'un des ports de communication 28, 30, 32, 34 disposés en partie supérieure de l'appareil 20, ou encore orientés vers le haut, puis pour en déduire l'orientation de l'appareil 20.

Pour la détection de la connexion de l'équipement de tête 14 avec l'un des ports de communication 28, 30, 32, 34, le module de gestion 75 est par exemple configuré pour acquérir un identifiant de chaque équipement audio 14, 22, 24, 26 connecté à un port de communication 28, 30, 32, 34 respectif, et pour déterminer alors à quel port de communication 28, 30, 32, 34 respectif est connecté l'équipement audio 14, 22, 24, 26 dont l'identifiant correspond à l'équipement de tête 14. Cette acquisition d'identifiant est typiquement effectuée via un échange de message(s) selon la norme de communication numérique à laquelle chaque port de communication 28, 30, 32, 34 est conforme.

En complément facultatif, le module de gestion 75 est configuré en outre pour associer un paramètre prédéfini de fonctionnement au sélecteur 56, 58 en partie supérieure. Selon ce complément facultatif, le module de gestion 75 est de préférence configuré pour changer l'association entre sélecteurs 56, 58 et paramètres respectifs de fonctionnement en cas de détection d'un changement d'orientation de l'appareil 20.

Ainsi, l'appareil d'interconnexion 20 selon l'invention permet de faciliter l'interconnexion des différents équipements audio 14, 22, 24, 26, c'est-à-dire la connexion de chaque équipement audio 14, 22, 24, 26 respectif à l'appareil d'interconnexion 20. En effet, chaque port de communication 28, 30, 32, 34 étant conforme à la norme de communication numérique, chaque équipement audio 14, 22, 24, 26 échange, lors de sa connexion à l'appareil d'interconnexion 20 et selon la norme de communication numérique, des informations d'initialisation appropriées, notamment son identifiant, avec l'appareil d'interconnexion 20. Ceci permet alors d'automatiser la configuration de l'équipement audio 14, 22, 24, 26 correspondant lors de sa connexion à l'appareil d'interconnexion 20, et donc de faciliter l'interconnexion des équipements audio 14, 22, 24, 26.

En outre, l'adaptation de la configuration de l'appareil d'interconnexion 20 en fonction de son orientation est particulièrement facilitée, et permet alors à l'opérateur 12 de passer très facilement d'un positionnement de l'appareil d'interconnexion 20 sur sa poitrine gauche à un positionnement sur sa poitrine droite, et inversement, comme représenté dans l'exemple de la figure 2. Ce changement de positionnement s'opère alors simplement via un renversement de l'appareil d'interconnexion 20 par rapport au plan médian P, tel qu'illustré par la flèche F.

L'homme du métier observera en outre que différentes caractéristiques optionnelles et complémentaires l'une de l'autre permettent de faciliter encore cette adaptation de configuration en cas de renversement de l'appareil d'interconnexion 20. En effet, ce renversement est facilité de par la disposition des connecteurs 38, 40, 42, 44 de part et d'autre du plan médian P, et/ou de par la disposition des sélecteurs 56, 58 de part et d'autre du plan médian P, et/ou de par la disposition des boutons d'appui pour parler 60, 62, 64, 66 de part et d'autre dudit plan médian P. L'homme du métier comprendra également que lorsque cette disposition des connecteurs 38, 40, 42, 44 et/ou des sélecteurs 56, 58 et/ou des boutons d'appui pour parler 60, 62, 64, 66 de part et d'autre du plan médian P est une disposition symétrique par rapport à ce plan médian P, alors le renversement est facilité davantage.

Ce renversement est également facilité de par la capacité du module de gestion 75 à modifier la configuration d'au moins un élément parmi les ports de communication 28, 30, 32, 34, les sélecteurs 56, 58 et les boutons d'appui pour parler 60, 62, 64, 66, en cas de détection d'un changement d'orientation de l'appareil d'interconnexion 20. Cette modification de configuration, en particulier la modification du couplage entre sélecteur 56, 58 et paramètre de fonctionnement associé, en cas de changement d'orientation de l'appareil d'interconnexion 20 permet typiquement que le paramètre de fonctionnement associé au sélecteur 56, 58 disposé en partie supérieure soit systématiquement le même paramètre, et de manière analogue que celui associé au sélecteur 56, 58 disposé en partie inférieure soit aussi systématiquement le même autre paramètre.

Ceci permet alors de faciliter grandement l'utilisation de l'appareil d'interconnexion 20 par l'opérateur 12 puisque celui-ci pourra alors toujours faire varier le même paramètre de fonctionnement avec le sélecteur 56, 58 disposé en partie supérieure de l'appareil d'interconnexion 20, et de manière analogue le même autre paramètre de fonctionnement avec le sélecteur 56, 58 disposé en partie inférieure.

On conçoit alors que l'appareil électronique d'interconnexion 20 selon l'invention permet de faciliter l'interconnexion des différents équipements audio 14, 22, 24, 26, c'est-à-dire la connexion de chaque équipement audio 14, 22, 24, 26 à l'appareil d'interconnexion 20.

## Revendications

1. Appareil électronique d'interconnexion (20) adapté pour interconnecter plusieurs équipements audio (14, 22, 24, 26), l'appareil (20) comprenant :
- plusieurs ports de communication (28, 30, 32, 34), chacun étant configuré pour être relié à un équipement audio (14, 22, 24, 26) respectif, un équipement audio (14, 22, 24, 26) étant un équipement de tête (14) comportant au moins un élément parmi un microphone (16) et un module de restitution audio (14, 22, 24, 26), au moins un autre équipement audio (14, 22, 24, 26) étant choisi parmi une radio (22, 24) et un système d'intercommunication (26) ;
- au moins un sélecteur (56, 58) configuré pour sélectionner, en fonction d'une manipulation d'un opérateur (12), une valeur d'un paramètre de fonctionnement ;
- au moins un bouton d'appui pour parler (60, 62, 64, 66) configuré pour, suite à une action de l'opérateur (12), autoriser l'émission d'un signal audio ;
- un dispositif électronique de traitement (70) relié à chaque sélecteur (56, 58) et à chaque bouton d'appui pour parler (60, 62, 64, 66), configuré pour acquérir un signal audio d'entrée via un port de communication (28, 30, 32, 34) et pour délivrer un signal audio de sortie à un autre port de communication (28, 30, 32, 34), le signal de sortie étant obtenu à partir du signal audio d'entrée ;
chaque port de communication (28, 30, 32, 34) étant conforme à une norme de communication numérique ;
- un module de gestion (75) configuré pour gérer une configuration d'au moins un élément parmi les ports de communication (28, 30, 32, 34), l'au moins un sélecteur (56, 58) et l'au moins un bouton d'appui pour parler (60, 62, 64, 66) ;
l'appareil (20) s'étend selon une direction d'extension, et le module de gestion (75) est configuré en outre pour modifier ladite configuration en cas de détection d'un changement d'orientation de l'appareil (20) par rapport à la direction d'extension.

2. Appareil (20) selon la revendication 1, dans lequel la norme de communication numérique est une norme USB.

3. Appareil (20) selon l'une quelconque des revendications précédentes, dans lequel l'appareil (20) comprend plusieurs connecteurs (38, 40, 42, 44), chacun étant associé à un port de communication (28, 30, 32, 34) respectif, plusieurs sélecteurs (56, 58) et plusieurs boutons d'appui pour parler (60, 62, 64, 66) ; et les connecteurs (38, 40, 42, 44), les sélecteurs (56, 58) et respectivement les boutons d'appui pour parler (60, 62, 64, 66) sont disposés de chaque côté d'un plan médian (P) de l'appareil (20) ;
un même nombre de connecteurs (38, 40, 42, 44), un même nombre de sélecteurs (56, 58), et respectivement un même nombre de boutons d'appui pour parler (60, 62, 64, 66) étant de préférence disposés de chaque côté dudit plan médian (P) ;
l'appareil (20) s'étendant selon une direction d'extension, et le plan médian (P) étant de préférence encore perpendiculaire à la direction d'extension.

4. Appareil (20) selon la revendication 3, dans lequel le nombre de connecteurs (38, 40, 42, 44) et le nombre de sélecteurs (56, 58) et le nombre de boutons d'appui pour parler (60, 62, 64, 66) sont chacun un nombre pair respectif ;
le nombre de connecteurs (38, 40, 42, 44) étant de préférence égal à quatre, le nombre de sélecteurs (56, 58) étant égal à deux, et le nombre de boutons d'appui pour parler (60, 62, 64, 66) étant égal à quatre ; et de chaque côté du plan médian (P) sont alors disposés deux connecteurs (38, 40, 42, 44), un sélecteur (56, 58), et respectivement deux boutons d'appui pour parler (60, 62, 64, 66).

5. Appareil (20) selon l'une quelconque des revendications précédentes, dans lequel le module de gestion (75) est apte à recevoir un fichier de configuration, et est configuré pour modifier ladite configuration, en fonction du fichier de configuration reçu.

6. Appareil (20) selon l'une quelconque des revendications précédentes, dans lequel la direction d'extension est une direction verticale (Z), en particulier lorsque l'appareil (20) est porté par un opérateur (12) le long de son corps.

7. Appareil (20) selon l'une quelconque des revendications précédentes, dans lequel l'appareil (20) comprend en outre un capteur (78) configuré pour détecter un changement d'orientation de l'appareil (20) par rapport à la direction d'extension, le module de gestion (75) étant connecté au capteur (78) et configuré pour détecter le changement d'orientation via ledit capteur (78) ;
le capteur (78) étant de préférence un accéléromètre.

8. Appareil (20) selon l'une quelconque des revendications 1 à 6, dans lequel le module de gestion (75) est apte à détecter une connexion de l'équipement de tête (14) avec l'un des ports de communication (28, 30, 32, 34), et est configuré pour déterminer l'orientation de l'appareil (20), en fonction du port de communication (28, 30, 32, 34) relié à l'équipement de tête (14).

9. Appareil (20) selon l'une quelconque des revendications précédentes, dans lequel le nombre de sélecteurs (56, 58) est supérieur ou égal à deux, et la configuration de chaque sélecteur (56, 58) comporte l'association à un paramètre de fonctionnement respectif ;
le paramètre de fonctionnement étant de préférence choisi parmi le groupe consistant en : un volume sonore en écoute, un identifiant d'un ensemble d'un ou plusieurs canaux en écoute, et un volume sonore en émission, avec de préférence en outre une fonctionnalité de sourdine en émission.

10. Appareil (20) selon la revendication 9, dans lequel le nombre de sélecteurs (56, 58) est égal à deux, avec un sélecteur (56, 58) situé en partie supérieure de l'appareil (20) selon l'orientation courante de l'appareil (20), et l'autre sélecteur (56, 58) situé en partie inférieure selon ladite orientation ; et le module de gestion (75) est configuré en outre pour associer un paramètre prédéfini de fonctionnement au sélecteur (56, 58) en partie supérieure ;
le module de gestion (75) étant de préférence configuré pour changer l'association entre sélecteurs (56, 58) et paramètres respectifs de fonctionnement en cas de détection d'un changement d'orientation de l'appareil (20).

11. Appareil (20) selon l'une quelconque des revendications précédentes, dans lequel le nombre de boutons d'appui pour parler (60, 62, 64, 66) est supérieur ou égal à deux, et la configuration de chaque bouton d'appui pour parler (60, 62, 64, 66) comporte l'association à un ensemble respectif d'un ou plusieurs canaux sur lesquels est effectuée l'émission du signal audio.

12. Appareil (20) selon l'une quelconque des revendications précédentes, dans lequel l'appareil (20) comprend en outre un module de communication sans fil (80) configuré pour communiquer avec un équipement audio (14, 22, 24, 26) respectif selon un protocole de radiocommunication ;
le module de communication sans fil (80) étant de préférence un module à courte portée, telle qu'une portée inférieure à 100 m ;
le protocole de radiocommunication étant de préférence conforme à une norme Bluetooth^{®}, telle qu'en version 5.0 ou ultérieure.

13. Système audio (10) destiné à équiper un opérateur (12), notamment un fantassin, le système (10) comprenant :
- un équipement de tête (14) comportant au moins un élément parmi un microphone (16) et un module de restitution audio (18), et
- un appareil électronique d'interconnexion (20) connecté à l'équipement de tête (14) et destiné à être connecté à au moins un autre équipement audio (22, 24, 26) choisi parmi une radio (22, 24) et un système d'intercommunication (26), l'appareil électronique d'interconnexion (20) étant selon l'une quelconque des revendications précédentes.

## Patentansprüche

1. Elektronisches Verbindungsgerät (20) zur Verbindung mehrerer Audioausrüstungen (14, 22, 24, 26), wobei das Gerät (20) umfasst:
- mehrere Kommunikationsports (28, 30, 32, 34), die jeweils so konfiguriert sind, dass sie mit einer jeweiligen Audioausrüstung (14, 22, 24, 26) verbunden werden können, wobei eine Audioausrüstung (14, 22, 24, 26) eine Kopfausrüstung (14) ist, die mindestens ein Element von einem Mikrofon (16) und einem Audiowiedergabemodul (14, 22, 24, 26) aufweist, wobei mindestens eine andere Audioausrüstung (14, 22, 24, 26) aus einem Funkgerät (22, 24) und einem Interkommunikationssystem (26) ausgewählt ist;
- mindestens einen Wahlschalter (56, 58), der so konfiguriert ist, dass er in Abhängigkeit von einer Handhabung durch einen Bediener (12) einen Wert eines Betriebsparameters auswählt;
- mindestens eine Sprechdrucktaste (60, 62, 64, 66), die so konfiguriert ist, dass sie nach einer Aktion durch den Bediener (12) die Ausgabe eines Audiosignals gestattet;
- eine elektronische Verarbeitungsvorrichtung (70), die mit jedem Wahlschalter (56, 58) und jeder Sprechdrucktaste (60, 62, 64, 66) verbunden und so konfiguriert ist, dass sie ein Audio-Eingangssignal über einen Kommunikationsport (28, 30, 32, 34) erfasst und einem anderen Kommunikationsport (28, 30, 32, 34) ein Audio-Ausgangssignal bereitstellt, wobei das Ausgangssignal ausgehend von dem Audio-Eingangssignal gewonnen wird;
wobei jeder Kommunikationsport (28, 30, 32, 34) einem digitalen Kommunikationsstandard entspricht;
- ein Verwaltungsmodul (75), das so konfiguriert ist, dass es eine Konfiguration von mindestens einem Element von den Kommunikationsports (28, 30, 32, 34), dem mindestens einen Wahlschalter (56, 58) und der mindestens einen Sprechdrucktaste (60, 62, 64, 66) verwaltet;
wobei sich das Gerät (20) gemäß einer Erstreckungsrichtung erstreckt und das Verwaltungsmodul (75) ferner so konfiguriert ist, dass es die Konfiguration ändert, wenn eine Änderung der Ausrichtung des Geräts (20) in Bezug auf die Erstreckungsrichtung erkannt wird.

2. Gerät (20) nach Anspruch 1, wobei der digitale Kommunikationsstandard ein USB-Standard ist.

3. Gerät (20) nach einem der vorhergehenden Ansprüche, wobei das Gerät (20) mehrere Verbinder (38, 40, 42, 44), die jeweils einem jeweiligen Kommunikationsport (28, 30, 32, 34) zugeordnet sind, mehrere Wahlschalter (56, 58) und mehrere Sprechdrucktasten (60, 62, 64, 66) umfasst; und die Verbinder (38, 40, 42, 44), die Wahlschalter (56, 58) und jeweils die Sprechdrucktasten (60, 62, 64, 66) auf jeder Seite einer Mittelebene (P) des Geräts (20) angeordnet sind;
wobei eine gleiche Anzahl von Verbindern (38, 40, 42, 44), eine gleiche Anzahl von Wahlschaltern (56, 58) und jeweils eine gleiche Anzahl von Sprechdrucktasten (60, 62, 64, 66) vorzugsweise auf jeder Seite der Mittelebene (P) angeordnet ist;
wobei sich das Gerät (20) gemäß einer Erstreckungsrichtung erstreckt und die Mittelebene (P) vorzugsweise noch senkrecht zur Erstreckungsrichtung verläuft.

4. Gerät (20) nach Anspruch 3, wobei die Anzahl der Verbinder (38, 40, 42, 44) und die Anzahl der Wahlschalter (56, 58) und die Anzahl der Sprechdrucktasten (60, 62, 64, 66) jeweils eine jeweilige gerade Zahl ist;
wobei die Anzahl der Verbinder (38, 40, 42, 44) vorzugsweise gleich vier ist, die Anzahl der Wahlschalter (56, 58) gleich zwei ist und die Anzahl der Sprechdrucktasten (60, 62, 64, 66) gleich vier ist; und auf jeder Seite der Mittelebene (P) dann zwei Verbinder (38, 40, 42, 44), ein Wahlschalter (56, 58) und jeweils zwei Sprechdrucktasten (60, 62, 64, 66) angeordnet sind.

5. Gerät (20) nach einem der vorhergehenden Ansprüche, wobei das Verwaltungsmodul (75) imstande ist, eine Konfigurationsdatei zu empfangen und so konfiguriert ist, dass es die Konfiguration in Abhängigkeit von der empfangenen Konfigurationsdatei ändert.

6. Gerät (20) nach einem der vorhergehenden Ansprüche, wobei die Erstreckungsrichtung eine vertikale Richtung (Z) ist, insbesondere, wenn das Gerät (20) von einem Bediener (12) entlang seines Körpers getragen wird.

7. Gerät (20) nach einem der vorhergehenden Ansprüche, wobei das Gerät (20) ferner einen Sensor (78) umfasst, der so konfiguriert ist, dass er eine Änderung der Ausrichtung des Geräts (20) in Bezug auf die Erstreckungsrichtung erfasst, wobei das Verwaltungsmodul (75) mit dem Sensor (78) verbunden und so konfiguriert ist, dass es die Änderung der Ausrichtung über den Sensor (78) erfasst;
wobei der Sensor (78) vorzugsweise ein Beschleunigungsmesser ist.

8. Gerät (20) nach einem der Ansprüche 1 bis 6, wobei das Verwaltungsmodul (75) imstande ist, eine Verbindung der Kopfausrüstung (14) mit einem der Kommunikationsports (28, 30, 32, 34) zu erkennen, und konfiguriert ist, um die Ausrichtung des Geräts (20) in Abhängigkeit von dem Kommunikationsport (28, 30, 32, 34), der mit der Kopfausrüstung (14) verbunden ist, zu bestimmen.

9. Gerät (20) nach einem der vorhergehenden Ansprüche, wobei die Anzahl der Wahlschalter (56, 58) größer oder gleich zwei ist und die Konfiguration jedes Wahlschalters (56, 58) die Zuordnung zu einem jeweiligen Betriebsparameter aufweist;
wobei der Betriebsparameter vorzugsweise aus der Gruppe ausgewählt ist, die besteht aus: einer Abhörlautstärke, einer Kennung einer Gesamtheit aus einem oder mehreren Abhörkanälen und einer Sendelautstärke, mit vorzugsweise ferner einer Sende-Stummschaltungsfunktionalität.

10. Gerät (20) nach Anspruch 9, wobei die Anzahl der Wahlschalter (56, 58) gleich zwei ist, mit einem Wahlschalter (56, 58), der sich im oberen Teil des Geräts (20) gemäß der aktuellen Ausrichtung des Geräts (20) befindet und dem anderen Wahlschalter (56, 58), der sich im unteren Teil gemäß dieser Ausrichtung befindet; und das Verwaltungsmodul (75) ferner so konfiguriert ist, dass es dem Wahlschalter (56, 58) im oberen Teil einen vordefinierten Betriebsparameter zuordnet;
wobei das Verwaltungsmodul (75) vorzugsweise so konfiguriert ist, dass es die Zuordnung zwischen Wahlschaltern (56, 58) und jeweiligen Betriebsparametern ändert, wenn eine Änderung der Ausrichtung des Geräts (20) erkannt wird.

11. Gerät (20) nach einem der vorhergehenden Ansprüche, wobei die Anzahl der Sprechdrucktasten (60, 62, 64, 66) größer oder gleich zwei ist und die Konfiguration jeder Sprechdrucktaste (60, 62, 64, 66) die Zuordnung zu einer jeweiligen Gesamtheit aus einem oder mehreren Kanälen umfasst, über die die Übertragung des Audiosignals durchgeführt wird.

12. Gerät (20) nach einem der vorhergehenden Ansprüche, wobei das Gerät (20) ferner ein drahtloses Kommunikationsmodul (80) umfasst, das so konfiguriert ist, dass es mit einer jeweiligen Audioausrüstung (14, 22, 24, 26) gemäß einem Funkkommunikationsprotokoll kommuniziert;
wobei das drahtlose Kommunikationsmodul (80) vorzugsweise ein Modul mit kurzer Reichweite ist, wie beispielsweise einer Reichweite von weniger als 100 m;
wobei das Funkkommunikationsprotokoll vorzugsweise einem Bluetooth^{®}-Standard entspricht, wie z. B. in Version 5.0 oder höher.

13. Audiosystem (10) zur Ausrüstung eines Bedieners (12), insbesondere eines Infanteristen, wobei das System (10) umfasst:
- eine Kopfausrüstung (14), die mindestens ein Element von einem Mikrofon (16) und einem Audiowiedergabemodul (18) aufweist, und
- ein elektronisches Verbindungsgerät (20), das mit der Kopfausrüstung (14) verbunden und dazu bestimmt ist, mit mindestens einer anderen Audioausrüstung (22, 24, 26) verbunden zu sein, die aus einem Funkgerät (22, 24) und einem Interkommunikationssystem (26) ausgewählt ist, wobei das elektronische Verbindungsgerät (20) nach einem der vorhergehenden Ansprüche ist.

## Claims

1. An electronic interconnection apparatus (20) adapted for interconnecting a plurality of audio equipment (14, 22, 24, 26), the apparatus (20) comprising:
- several communication ports (28, 30, 32, 34), each configured for being connected to a respective audio equipment (14, 22, 24, 26), one audio equipment (14, 22, 24, 26) being a headgear (14) including at least one amongst a microphone (16) and an audio receiving module (14, 22, 24, 26), at least one other audio equipment (14, 22, 24, 26) being selected from a radio (22, 24) and an intercommunication system (26);
- at least one selector (56, 58) configured for selecting, according to a manipulation by an operator (12), a value of an operating parameter;
- at least one push-to-talk button (60, 62, 64, 66) configured for authorizing, following an action by the operator (12), the transmission of an audio signal;
- an electronic processing device (70) connected to each selector (56, 58) and to each push-to-talk button (60, 62, 64, 66), configured for acquiring an input audio signal via a communication port (28, 30, 32, 34) and for delivering an output audio signal to another communication port (28, 30, 32, 34), the output signal being obtained from the input audio signal;
each communication port (28, 30, 32, 34) being according to a digital communication standard;
- a management module (75) configured for managing a configuration of at least one of the communication ports (28, 30, 32, 34), of the at least one selector (56, 58) and of the at least one push-to-talk button (60, 62, 64, 66);
the apparatus (20) extends along a direction of extension, and the management module (75) is further configured for modifying said configuration upon detection of a change of orientation of the apparatus (20) with respect to the direction of extension

2. The apparatus (20) according to claim 1, wherein the digital communication standard is a USB standard.

3. The apparatus (20) according to any one of the preceding claims, wherein the apparatus (20) comprises several connectors (38, 40, 42, 44), each associated with a respective communication port (28, 30, 32, 34), several selectors (56, 58) and several push-to-talk buttons (60, 62, 64, 66); and the connectors (38, 40, 42, 44), the selectors (56, (58) and the push-to-talk buttons (60, 62, 64, 66), respectively, being arranged on either side of a median plane (P) of the apparatus (20);
a same number of connectors (38, 40, 42, 44), a same number of selectors (56, 58), and a same number of push-to-talk buttons (60, 62, 64, 66), respectively, being preferentially arranged on each side of said median plane (P);
the apparatus (20) extending along a direction of extension, and the median plane (P) being still preferentially perpendicular to the direction of extension.

4. The apparatus (20) according to claim 3, wherein the number of connectors (38, 40, 42, 44) and the number of selectors (56, 58) and the number of push-to-talk button (60, 62, 64, 66) are each an even number respectively;
the number of connectors (38, 40, 42, 44) being preferentially equal to four, the number of selectors (56, 58) being equal to two, and the number of push-to-talk buttons (60, 62, 64, 66) being equal to four; and on each side of the median plane (P) are then arranged two connectors (38, 40, 42, 44), one selector (56, 58), and two push-to-talk buttons (60, 62, 64, 66) respectively.

5. The apparatus (20) according to any one of the preceding claims, wherein the management module (75) is adapted to receive a configuration file, and is configured for modifying said configuration, according to the received configuration file.

6. The apparatus (20) according to any one of the preceding claims, wherein the direction of extension is a vertical direction (Z), in particular when the apparatus (20) is worn by an operator (12) along the operator's body.

7. The apparatus (20) according to any one of the preceding claims, wherein the apparatus (20) further comprises a sensor (78) configured for detecting a change of orientation of the apparatus (20) with respect to the direction of extension, the management module (75) being connected to the sensor (78) and configured for detecting the change of orientation via said sensor (78);
the sensor (78) being preferentially an accelerometer.

8. The apparatus (20) according to any one of claims 1 to 6, wherein the management module (75) is adapted to detect a connection of the headgear (14) to one of the communication ports (28, 30, 32, 34), and is configured for determining the orientation of the apparatus (20), depending on the communication port (28, 30, 32, 34) connected to the headgear (14).

9. The apparatus (20) according to any one of the preceding claims, wherein the number of selectors (56, 58) is greater than or equal to two, and the configuration of each selector (56, 58) includes the association with a respective operating parameter;
the operating parameter being preferentially selected from the group consisting of: a receiving sound volume, an identifier of a set of one or several reception channels, and a transmission sound volume, preferentially with a transmission mute function.

10. The apparatus (20) according to claim 9, wherein the number of selectors (56, 58) is equal to two, with one selector (56, 58) situated at the top of the apparatus (20) according to the current orientation of the apparatus (20), and the other selector (56, 58) situated at the bottom according to said orientation; and the management module (75) being further configured for associating a predefined operating parameter with the selector (56, 58) at the upper part;
the management module (75) being preferentially configured for changing the association between the selectors (56, 58) and respective operating parameters upon detection of a change of orientation of the apparatus (20).

11. The apparatus (20) according to any one of the preceding claims, wherein the number of push-to-talk buttons (60, 62, 64, 66) is greater than or equal to two, and the configuration of each push-to-talk button (60, 62, 64, 66) includes the association with a respective set of one or several channels on which the audio signal is transmitted.

12. The apparatus (20) according to any one of the preceding claims, wherein the apparatus (20) further comprises a wireless communication module (80) configured for communicating with a respective audio equipment (14, 22, 24, 26) according to a radio communication protocol;
the wireless communication module (80) preferentially having a short-range, such as a range of less than 100 m;
the radio communication protocol preferentially being according to a Bluetooth^{®} standard, such as version 5.0 or a later version.

13. An audio system (10) intended for equipping an operator (12), such as an infantryman, the system (10) comprising:
- a headgear (14) including at least one amongst a microphone (16) and an audio receiving module (18), and
- an electronic interconnection apparatus (20) connected to the headgear (14) and intended for being connected to at least one other audio equipment (22, 24, 26) selected from a radio (22, 24) and an intercommunication system (26), the electronic interconnection apparatus (20) being according to any one of the preceding claims.
